# EUROPEAN PATENT SPECIFICATION

(11) **EP 3 878 750 B1**
(45) Date of publication and mention of the grant of the patent: **06.09.2023**
(21) Application number: 21162157.8
(22) Date of filing: 11.03.2021
(51) Int. Cl.: B64D 15/02, B64D 15/04, F02C 7/047

(54) **VARIABLE DIAMETER PICCOLO TUBE FOR ANTI-ICING SYSTEM**
PICCOLOROHR MIT VARIABLEM DURCHMESSER FÜR ENTEISUNGSSYSTEM
TUBE PICCOLO À DIAMÈTRE VARIABLE POUR SYSTÈME ANTIGIVRAGE

(30) Priority: 12.03.2020 IN 202041010650; 19.12.2020 US 202017128049
(43) Date of publication of application: 15.09.2021
(73) Proprietor: Rohr, Inc., Chula Vista, CA 91910-2098 (US)
(72) Inventor: JOY, Joewin, 682022 Kerala (IN); RADHAKRISHNAN, Senthilkumar, 560066 Karnataka (IN)
(74) Representative: Dehns

(56) References cited:
- EP-A1- 2 527 253
- EP-A1- 3 196 123
- GB-A- 486 549
- US-A1- 2014 263 837

## Description

### FIELD

The present disclosure (invention) relates to aircraft nacelles and, more particularly, to a variable diameter piccolo tube for anti-icing systems.

### BACKGROUND

A nacelle for a turbine engine typically includes an inlet, a fan cowl, a thrust reverser, and an exhaust section. The nacelle is typically mounted to a wing or a fuselage of an aircraft via a pylon. An anti-icing systems may be employed to prevent or minimize ice build-up along the nacelle inlet.

EP 2 527 253 A1, EP3196123A1, GB486549A and US2014/263837A1 disclose arrangements of the prior art.

### SUMMARY

A piccolo tube for an anti-icing system is disclosed herein. The disclosed piccolo tube may comprise an annular tube and a plurality of openings formed along a circumference of the annular tube. The annular tube may comprise a first cross-sectional diameter at an inlet point and a second cross-sectional diameter at a distal point. The second cross-sectional diameter may be less than the first cross-sectional diameter, and the distal point may be 180° from the inlet point.

In accordance with an aspect of the invention, a piccolo tube for an anti-icing system provided according to claim 1.

In various optional embodiments, an area of a first opening of the plurality of openings is approximately equal to an area of a second opening of the plurality of openings, the first opening being located proximate the inlet point and the second opening being located proximate the distal point.

In various optional embodiments, a conduit may be fluidly coupled to the annular tube at the inlet point.

In various optional embodiments, the annular tube may comprise a first portion having a constant cross-sectional diameter and a second portion that is tapered. In various optional embodiments, the plurality of openings may include a first group of openings located in the first portion and a second group of openings located in the second portion. The first group of openings may increase in area in a direction extending from the inlet point to the second portion.

In various optional embodiments, each opening in the second group of openings may be equal in area.

An inlet for a nacelle is also disclosed herein. The disclosed inlet may comprise an outer barrel, an inner barrel, a lip skin located at a forward end of the outer barrel, and a piccolo tube defining a plurality of openings oriented toward the lip skin. The piccolo tube may comprise a first cross-sectional diameter at an inlet point and a second cross-sectional diameter at a distal point. The second cross-sectional diameter may be less than the first cross-sectional diameter, and the distal point may be 180° from the inlet point.

In accordance with another aspect of the invention, an inlet for a nacelle is provided according to claim 7.

In various optional embodiments, a conduit may be fluidly coupled to the piccolo tube at the inlet point. In various optional embodiments, an area of a first opening of the plurality of openings may be approximately equal to an area of a second opening of the plurality of openings. The first opening may be located proximate the inlet point and the second opening being located proximate the distal point.

In various optional embodiments, the piccolo tube may comprise a first portion having a constant cross-sectional diameter and a second portion that is tapered. In various optional embodiments, the plurality of openings may include a first group of openings located in the first portion of the piccolo tube and a second group of openings located in the second portion of the piccolo tube. A first opening located in the first portion of the piccolo tube may have an area that is less than an area of a second opening located in the first portion of the piccolo tube. The first opening may be located proximate the inlet point and the second opening may be located proximate the second portion of the piccolo tube. The first group of openings includes the first opening and the second opening.

In various optional embodiments, each opening in the second group of openings may have an area that is approximately equal to an area of the second opening in the first or second group of openings.

In various optional embodiments, the plurality of openings may include a first group of openings located in the first portion of the piccolo tube and a second group of openings located in the second portion of the piccolo tube. A first opening located in the second portion of the piccolo tube may have an area that is less than an area of a second opening located in the second portion of the piccolo tube. The first opening may be located proximate the first portion of the piccolo tube and the second opening may be located proximate the distal point. The second group of openings includes the first opening and the second opening.

A propulsion system is also disclosed herein. The disclosed population system may comprise a gas turbine engine, a nacelle located around the gas turbine engine, a piccolo tube defining a plurality of openings oriented toward a surface of the nacelle, and a conduit fluidly coupled between the gas turbine engine and an inlet point of the piccolo tube. The piccolo tube may comprise a first cross-sectional diameter at the inlet point and a second cross-sectional diameter at a distal. The second cross-sectional diameter may be less than the first cross-sectional diameter, and the distal point may be 180° from the inlet point.

In accordance with another aspect of the invention, a propulsion system is provided according to claim 10.

In various optional embodiments, each opening of the plurality of openings may be approximately equal in area.

In various optional embodiments, the piccolo tube may comprise a first portion having a constant cross-sectional diameter and a second portion that is tapered.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A illustrates a perspective view of a nacelle, in accordance with various embodiments;
FIG. 1B illustrates an exploded view of a propulsion system, in accordance with various embodiments;
FIG. 2A illustrates a perspective view of a nacelle inlet, in accordance with various embodiments;
FIG. 2B illustrates a cross-section view of a nacelle inlet taken along the line 2B-2B in FIG. 2A, in accordance with various embodiments;
FIG. 3 illustrates a perspective view of a piccolo tube for an anti-icing system, in accordance with various embodiments; and
FIG. 4 illustrates a perspective view of a piccolo tube for an anti-icing system, in accordance with various embodiments .

### DETAILED DESCRIPTION

The detailed description of various embodiments herein makes reference to the accompanying drawings, which show various embodiments by way of illustration. While these various embodiments are described in sufficient detail to enable those skilled in the art to practice the inventions, it should be understood that other embodiments may be realized and that logical, chemical and mechanical changes may be made without departing from the scope of the inventions. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

Surface shading and/or crosshatching lines may be used throughout the figures to denote different parts, but not necessarily to denote the same or different materials. Throughout the present disclosure, like reference numbers denote like elements. Accordingly, elements with like element numbering may be shown in the figures, but may not necessarily be repeated herein for the sake of clarity.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

A first component that is "radially outward" of a second component means that the first component is positioned at a greater distance away from the engine central longitudinal axis than the second component. A first component that is "radially inward" of a second component means that the first component is positioned closer to the engine central longitudinal axis than the second component. In the case of components that rotate circumferentially about the engine central longitudinal axis, a first component that is radially inward of a second component rotates through a circumferentially shorter path than the second component.

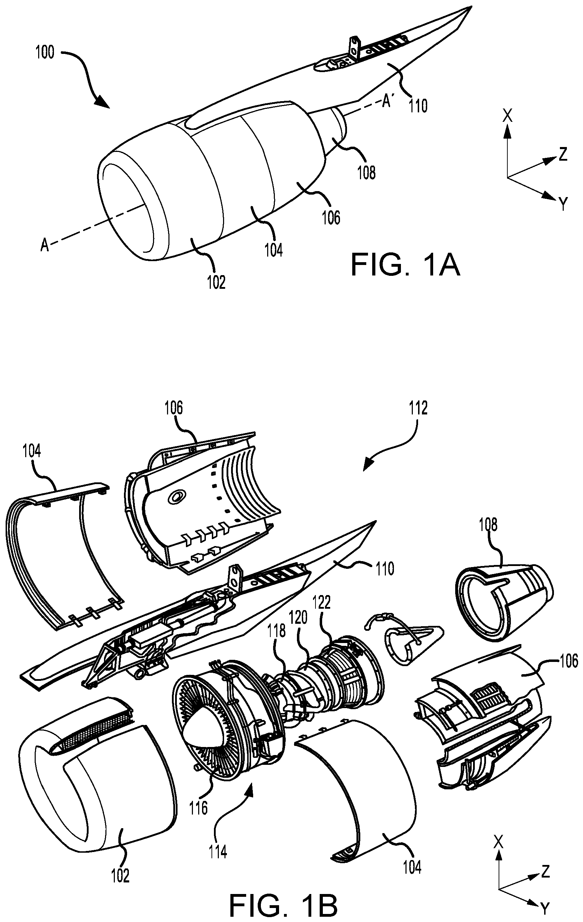

Referring to FIG. 1A, a nacelle 100 of a propulsion system is illustrated, in accordance with various embodiments. Nacelle 100 may comprise an inlet 102 (also referred to as a nacelle inlet), a fan cowl 104, a thrust reverser 106, and an exhaust system 108. Nacelle 100 provides smooth aerodynamic surfaces for airflow around and into a gas turbine engine housed within nacelle 100. Nacelle 100 may be coupled to a pylon 110. Pylon 110 may be configured to mount nacelle 100 and the gas turbine engine surrounded by nacelle 100 to an aircraft wing or aircraft body.

Referring now to FIG. 1B, and with continuing reference to FIG. 1A, an exploded view of a propulsion system 112 is illustrated, in accordance with various embodiments. In accordance with various embodiments, propulsion system 112 includes nacelle 100 and a gas turbine engine 114. Gas turbine engine 114 may be surrounded by components of nacelle 100. Nacelle 100 may provide smooth aerodynamic surfaces for airflow around and into gas turbine engine 114. Nacelle 100 may define at least a portion of one or more bypass air duct(s) through propulsion system 112.

A fan 116 of gas turbine engine 114 draws and directs a flow of air into and through propulsion system 112. The air may be divided into two principal flow paths: a core flow path through the core of gas turbine engine 114, and a bypass flow path through one or more bypass ducts outside of the core of gas turbine engine 114. The air in the core flow path may be directed through a compressor section 118 of gas turbine engine 114 that increases the air flow pressure and then through a combustor 120 of gas turbine engine 114 where the air is mixed with fuel and ignited. The combustion of the fuel and air mixture is received by a series of turbine blades in a turbine section 122 of gas turbine engine 114. The combustion gases cause the turbine blades to rotate and drive the rotors and fan 116 of gas turbine engine 114. The rotor stages (i.e., rotating airfoils or blades) of fan 116, compressor section 118, and turbine section 122 of gas turbine engine 20 may rotate about an engine central longitudinal axis A-A'. The exhaust gases exiting the turbine section 122 of gas turbine engine 114 may be directed through exhaust system 108. The air in the bypass flow path may be directed around the engine core through one or more bypass duct(s) defined, at least partially, by nacelle 100.

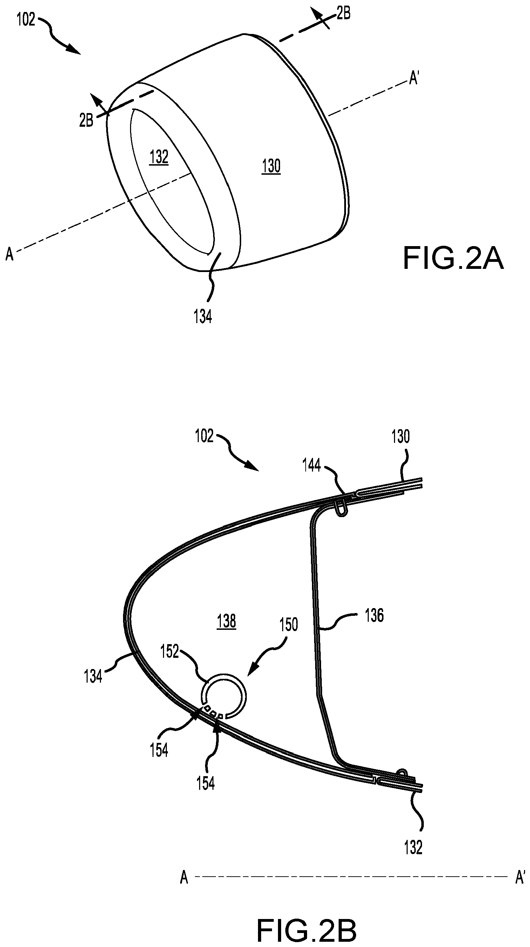

Referring to FIGs. 2A and 2B, inlet 102 is illustrated, in accordance with various embodiments. In various embodiments, inlet 102 may include a first (or outer) barrel 130 and a second (or inner) barrel 132 located radially inward of first barrel 130. Inlet 102 further includes a lip skin 134 and a bulkhead 136 extending between first barrel 130 and second barrel 132. Lip skin 134 may be located at and may define a forward end of inlet 102. In this regard, lip skin 134 may be located forward of first barrel 130, second barrel 132, and bulkhead 136. Lip skin 134 and bulkhead 136 may define a forward volume 138 of inlet 102. First barrel 130, second barrel 132, lip skin 134, and bulkhead 136 may each comprise a generally annular structure, which may be disposed around engine central longitudinal axis A-A'. Engine central longitudinal axis A-A' extends in a forward to aft direction. As used herein, the term "axial" refers to directions parallel to engine central longitudinal axis A-A', the term "circumferential" refers to direction about engine central longitudinal axis A-A', and the term "radial" refers to directions normal to engine central longitudinal axis A-A'.

In accordance with various embodiments, inlet 102 may include an anti-icing system 150. Anti-icing system 150 includes a piccolo tube 152 configured to direct an impingement flow at lip skin 134. In this regard, piccolo tube 152 may define a plurality of openings 154. In various embodiments, piccolo tube 152 may be located in forward volume 138. The impingement flow tends to prevent or reduce ice build-up on inlet 102. While anti-icing system 150 is illustrated as including one piccolo tube 152 located in forward volume 138, it is contemplated and understood that anti-icing system 150 may include any number of piccolo tubes 152 positioned at other locations or at multiple locations along inlet 102 and/or position along any other annular structure that may susceptible to ice build-up.

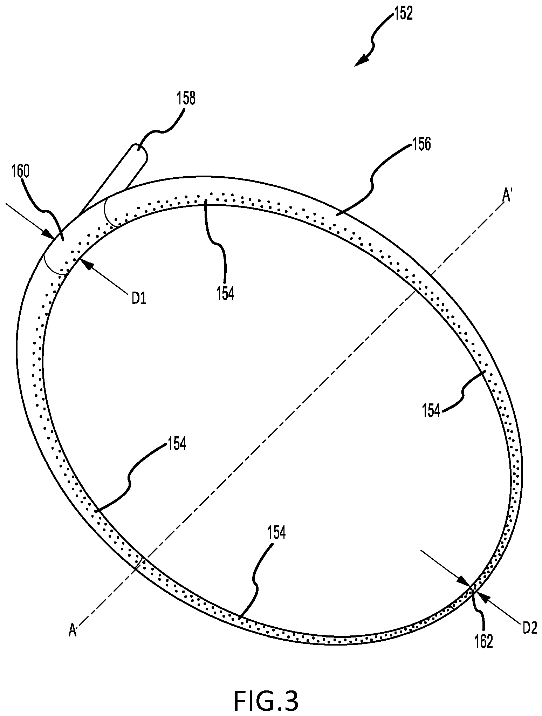

Referring to FIG. 3, piccolo tube 152 of anti-icing system 150 is illustrated. In accordance with various embodiments, piccolo tube 152 comprises an annular-shaped tube 156. Tube 156 may be formed from metal, metal alloy, composite, ceramic, or any other desired material. Tube 156 defines openings 154. In accordance with various embodiments, a conduit 158 is fluidly coupled to tube 156. Conduit 158 may provide fluid (e.g., air) bled from gas turbine engine 114, with momentary reference to FIG. 1A, to tube 156. For example, conduit 158 may provide fluid bled from compressor section 118. Conduit 158 is located at an inlet point 160 of tube 156.

In accordance with various embodiments, tube 156 comprises a cross-sectional diameter D1 at inlet point 160. In various embodiments, the cross-sectional diameter of tube 156 is greatest at inlet point 160. In accordance with various embodiments, the cross-sectional diameter of the tube 156 decreases between inlet point 160 and a distal point 162 located 180°, about engine central longitudinal axis A-A', from inlet point 160 and conduit 158. In this regard, tube 156 comprises a cross-sectional diameter D2 at distal point 162 that is less than the cross-sectional diameter D1 of tube 156 at inlet point 160. In various embodiments, the diameter or area of each of openings 154 is consistent, or approximately equal, about the circumference of tube 156 (i.e., about engine central longitudinal axis A-A'). As used in the previous context "approximately equal" means ±5% difference in area. In this regard, an opening 154 located proximate distal point 162 may be equal in area to an opening 154 located proximate inlet point 160.

In various embodiments, a ratio of cross-sectional diameter D1 to cross-sectional diameter D2 may be between 20:1 and 1.5:1. In various embodiments, a ratio of cross-sectional diameter D1 to cross-sectional diameter D2 maybe between 10:1 and 2:1. In various embodiments, a ratio of cross-sectional diameter D1 to cross-sectional diameter D2 maybe between 5:1 and 3: 1.

The varied cross-sectional diameter of tube 156 tends to modify mass flow rates at different points about tube 156, such that the fluid flow (also referred to as impingement flow) out openings 154 is consistent about longitudinal axis A-A'. Stated differently, the cross-sectional diameter along tube 156 is selected such that impingement flow (i.e., the volume of fluid that passes per unit of time) through each of openings 154 is approximately equal about longitudinal axis A-A'. As used in the previous context, "approximately equal" means ±10% difference in flow rate. In accordance with various embodiments, a rate of change in cross-sectional diameter of tube 156 is selected to generate a fluid flow and pressure within tube 156 that produces an impingement flow through of openings 154 (i.e., a volume of fluid that passes through an opening 154 per unit of time (e.g., per second)) that is approximately equal about longitudinal axis A-A'. In this regard, a volume of fluid that passes per second through an opening 154 located at inlet point 160 is approximately equal to a volume of fluid that passes per second through an opening 154 located at distal point 162 and is approximately equal to a volume of fluid that passes per second through an opening 154 located 90° about engine central longitudinal axis A-A' from inlet point 160. As used in the previous context "approximately equal" means ±10% difference in flow rate. A more equal impingement flow tends to increase the uniformity of the temperature and of the heating along the circumference of lip skin 134, with momentary reference to FIG. 2A, thereby increasing an effectiveness of the anti-icing system.

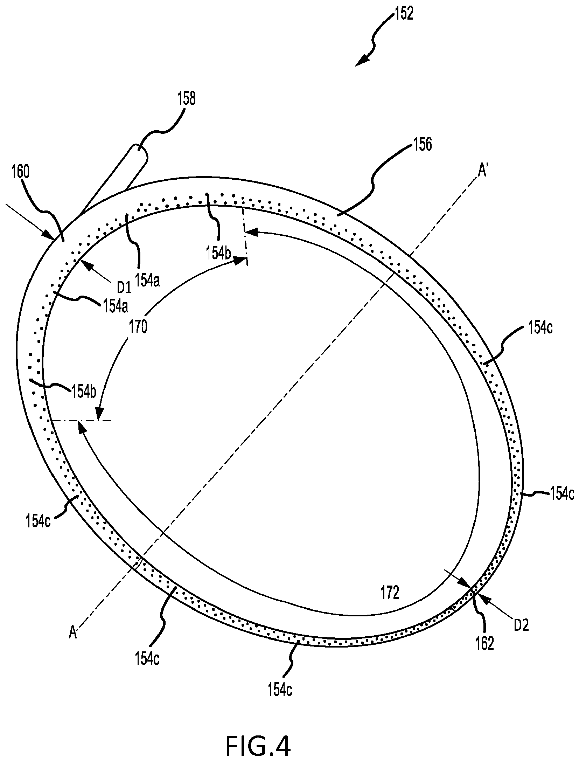

In various embodiments, tube 156 may include a first portion having a constant cross-sectional diameter and a second portion having a tapered cross-sectional diameter.
With reference to FIG. 4, and in accordance with the invention, a first portion 170 of tube 156 comprises cross-sectional diameter D1, and a second portion 172 of tube 156 comprises a cross-sectional diameter that decreases from cross-sectional diameter D1 to cross-sectional diameter D2. First portion 170 of tube 156 extends circumferentially about engine central longitudinal axis A-A' from inlet point 160. Second portion 172 of tube 156 may extend from the first portion 170 of tube 156 to the distal point 162. In accordance with the invention, first portion 170 is between ± 30° and ± 90° about engine central longitudinal axis A-A' from inlet point 160, or any desired length. For example, in various embodiments, first portion 170 may extend from inlet point 160 to -45° from inlet point 160 and from inlet point 160 to +45°, and second portion 172 may extend from distal point 162 to -45° from inlet point 160 and from distal point 162 to +45° from inlet point 160. In various embodiments, first portion 170 may extend ± 90°, about engine central longitudinal axis A-A', from inlet point 160 and second portion 172 may extend from ± 90°, about engine central longitudinal axis A-A', from distal point 162.

In various embodiments, the diameter and/or area of the openings 154 is consistent throughout the first portion 170 and second portion 172, such that the diameter and/or area of the openings 154 in first portion 170 is equal to the diameter and/or area of the openings 154 in second portion 172.

In various embodiments, the diameter and/or area of the openings 154 in the first portion 170 and/or second portion 172 may be varied. In various embodiments, a diameter and/or area of the openings 154 in first portion 170 may increase in a direction extending from inlet point 160 toward second portion 172. For example, a first group of openings 154a may have a diameter and/or area that is less than the diameter and/or area of a second group of openings 154b in first portion 170. The first group of openings 154a may be more proximate inlet point 160, as compared to the second group of openings 154b. In various embodiments, the openings 154c in second portion 172 may be equal in diameter and/or area to one another. In various embodiments, the openings 154c in second portion 172 may be equal in diameter and/or area to the second group of openings 154b in first portion 170. In various embodiments, the openings 154c in second portion 172 may be equal in diameter and/or area to the first group of openings 154a in first portion 170. In various embodiments, the openings 154c in second portion 172 may increase in diameter and/or area in a direction extending from first portion 170 to distal point 162. In accordance with various embodiments, the cross-sectional diameter of tube 156 and the area of the openings 154 in the tube 156 (e.g., openings 154a, 154b and 154c) are selected to impact mass flow rates at different points about tube 156 and to cause the impingement flow through the openings 154 to be approximately equal about tube 156. As used in the previous context, "approximately equal" means ±10% difference in flow rate.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure as defined in the appended claims. Accordingly, the description is not intended to be exhaustive or to limit the principles described or illustrated herein to any precise form. Many modifications and variations are possible in light of the above teaching, if they do not depart from the scope of the invention as defined in the appended claims.

## Claims

1. A piccolo tube for an anti-icing system, comprising:
an annular tube (156); and
a plurality of openings (154) formed along a circumference of the annular tube (156), wherein the annular tube (156) comprises a first portion having a first cross-sectional diameter (D1) and a second portion having a cross-sectional diameter that decreases to from the first cross-sectional diameter (D1) to a second cross-sectional diameter (D2) at a distal point (162), the second cross-sectional diameter (D2) being less than the first cross-sectional diameter (D1), and the distal point (162) being 180° from an inlet point (160);
wherein first portion (170) comprises the inlet point (160), and the first portion (170) extends from between -30° and -90° about an engine central longitudinal axis (A-A') from the inlet point to between +30° and +90° about the engine central longitudinal axis (A-A') from the inlet point.

2. The piccolo tube of claim 1, wherein, the first portion comprises a constant diameter, and wherein the second portion has a tapered cross-sectional diameter.

3. The piccolo tube of claim 1 or 2, wherein the piccolo tube further comprises a conduit (158) fluidly coupled to the annular tube (156) at the inlet point (160).

4. The piccolo tube of claim 1, 2 or 3, wherein an area of a first opening of the plurality of openings (154) is approximately equal to an area of a second opening of the plurality of openings (154), the first opening being located proximate the inlet point (160) and the second opening being located proximate the distal point (162).

5. The piccolo tube of claim 1, 2 or 3, wherein the plurality of openings (154) includes a first group of openings (154a, 154b) located in the first portion (170) and a second group of openings (154c) located in the second portion (172), and wherein the first group of openings (154a, 154b) increase in area in a direction extending from the inlet point (160) to the second portion (172).

6. The piccolo tube of claim 5, wherein each opening in the second group of openings (154c) is equal in area.

7. An inlet for a nacelle, comprising:
an outer barrel (130);
an inner barrel (132);
a lip skin (134) located at a forward end of the outer barrel (130); and
a piccolo tube (152) as recited in claim 1 or 2, wherein the plurality of openings (154) is oriented toward the lip skin (134).

8. The inlet of claim 7, further comprising a conduit (158) fluidly coupled to the piccolo tube (152) at the inlet point (160).

9. The inlet of claim 7 or 8, wherein an area of a first opening of the plurality of openings (154) is approximately equal to an area of a second opening of the plurality of openings (154), the first opening being located proximate the inlet point (160) and the second opening being located proximate the distal point (162).

10. A propulsion system, comprising:
a gas turbine engine (114);
a nacelle (100) located around the gas turbine engine (114);
a piccolo tube (152) as recited in claim 1 or 2, wherein the plurality of openings (154) is oriented toward a surface of the nacelle (100); and
a conduit (158) fluidly coupled between the gas turbine engine (114) and the inlet point (160) of the piccolo tube (152).

11. The inlet of any of claims 7-9, or the propulsion system of claim 10, wherein each opening of the plurality of openings (154) is approximately equal in area.

12. The inlet of any of claims 7 or 8, or the propulsion system of claim 10, wherein the plurality of openings (154) includes a first group of openings (154a, 154b) located in the first portion (170) of the piccolo tube (152) and a second group of openings (154c) located in the second portion (172) of the piccolo tube (152), and wherein a first opening located in the first portion (170) of the piccolo tube has an area that is less than an area of a second opening located in the first portion (170) of the piccolo tube, the first opening being located proximate the inlet point (160) and the second opening being located proximate the second portion (172) of the piccolo tube, the first group of openings (154a, 154b) including the first opening and the second opening.

13. The inlet of claim 12, or the propulsion system of claim 12, wherein each opening in the second group of openings (154c) has an area that is approximately equal to an area of the second opening in the first group of openings.

14. The inlet of any of claims 7 or 8, or the propulsion system of claim 10, wherein the plurality of openings (154) includes a first group of openings (154a, 154b) located in the first portion (170) of the piccolo tube (152) and a second group of openings (154c) located in the second portion (172) of the piccolo tube (152), and wherein a first opening located in the second portion (172) of the piccolo tube has an area that is less than an area of a second opening located in the second portion (172) of the piccolo tube, the first opening being located proximate the first portion (170) of the piccolo tube and the second opening being located proximate the distal point (162), the second group of openings (154c) including the first opening and the second opening.

15. The piccolo tube of any of claims 1-6, the inlet of any of claims 7-9 or 11-14, or the propulsion system of any of claims 10-14, wherein the second portion (172) extends from the distal point to -90° about the central longitudinal axial of the gas turbine engine (114) from the distal point (162) and from the distal point to +90° about the central longitudinal axis of the gas turbine engine (114) from the distal point (162).

## Patentansprüche

1. Piccolorohr für ein Enteisungssystem, umfassend:
ein ringförmiges Rohr (156); und
eine Vielzahl von Öffnungen (154), die entlang eines Umfangs des ringförmigen Rohrs (156) gebildet ist, wobei das ringförmige Rohr (156) einen ersten Abschnitt umfasst, der einen ersten Querschnittsdurchmesser (D1) aufweist, und einen zweiten Abschnitt, der einen Querschnittsdurchmesser aufweist, der von dem ersten Querschnittsdurchmesser (D1) zu einem zweiten Querschnittsdurchmesser (D2) an einem distalen Punkt (162) abnimmt, wobei der zweite Querschnittsdurchmesser (D2) kleiner als der erste Querschnittsdurchmesser (D1) ist, und sich der distale Punkt (162) 180° von einem Einlasspunkt (160) befindet;
wobei der erste Abschnitt (170) den Einlasspunkt (160) umfasst und sich der erste Abschnitt (170) von zwischen -30° und -90° um eine Triebwerksmittellängsachse (A-A') von dem Einlasspunkt bis zwischen +30° und +90° um die Triebwerksmittellängsachse (A-A') von dem Einlasspunkt erstreckt.

2. Piccolorohr nach Anspruch 1, wobei der erste Abschnitt einen konstanten Durchmesser umfasst, und wobei der zweite Abschnitt einen sich verjüngenden Querschnittsdurchmesser aufweist.

3. Piccolorohr nach Anspruch 1 oder 2, wobei das Piccolorohr ferner eine Leitung (158) umfasst, die an dem Einlasspunkt (160) fluidisch mit dem ringförmigen Rohr (156) gekoppelt ist.

4. Piccolorohr nach Anspruch 1, 2 oder 3, wobei eine Fläche einer ersten Öffnung der Vielzahl von Öffnungen (154) ungefähr gleich einer Fläche einer zweiten Öffnung der Vielzahl von Öffnungen (154) ist, wobei die erste Öffnung nahe dem Einlasspunkt (160) liegt, und die zweite Öffnung nahe dem distalen Punkt (162) liegt.

5. Piccolorohr nach Anspruch 1, 2 oder 3, wobei die Vielzahl von Öffnungen (154) eine erste Gruppe von Öffnungen (154a, 154b) beinhaltet, die sich in dem ersten Abschnitt (170) befindet, und eine zweite Gruppe von Öffnungen (154c), die sich in dem zweiten Abschnitt (172) befindet, und wobei die Fläche der ersten Gruppe von Öffnungen (154a, 154b) in einer Richtung, die sich von dem Einlasspunkt (160) zu dem zweiten Abschnitt (172) erstreckt, zunimmt.

6. Piccolorohr nach Anspruch 5, wobei jede Öffnung in der zweiten Gruppe von Öffnungen (154c) die gleiche Fläche aufweist.

7. Einlass für eine Gondel, umfassend:
einen Außenzylinder (130);
einen Innenzylinder (132);
eine Lippenhaut (134), die sich an einem vorderen Ende des Außenzylinders (130) befindet; und
eine Piccolorohr (152) nach Anspruch 1 oder 2, wobei die Vielzahl von Öffnungen (154) in Richtung der Lippenhaut (134) ausgerichtet ist.

8. Einlass nach Anspruch 7, ferner umfassend eine Leitung (158), die fluidisch an dem Einlasspunkt (160) mit dem Piccolorohr (152) verbunden ist.

9. Einlass nach Anspruch 7 oder 8, wobei eine Fläche einer ersten Öffnung der Vielzahl von Öffnungen (154) ungefähr gleich einer Fläche einer zweiten Öffnung der Vielzahl von Öffnungen (154) ist, wobei die erste Öffnung nahe dem Einlasspunkt (160) liegt, und die zweite Öffnung nahe dem distalen Punkt (162) liegt.

10. Antriebssystem, umfassend:
ein Gasturbinentriebwerk (114);
eine Gondel (100), die um das Gasturbinentriebwerk (114) liegt;
eine Piccolorohr (152) nach Anspruch 1 oder 2, wobei die Vielzahl von Öffnungen (154) in Richtung einer Oberfläche der Gondel (100) ausgerichtet ist; und
eine Leitung (158), die fluidisch zwischen dem Gasturbinentriebwerk (114) und dem Einlasspunkt (160) des Piccolorohrs (152) gekoppelt ist.

11. Einlass nach einem der Ansprüche 7-9 oder Antriebssystem nach Anspruch 10, wobei jede Öffnung der Vielzahl von Öffnungen (154) ungefähr die gleiche Fläche aufweist.

12. Einlass nach einem der Ansprüche 7 oder 8 oder Antriebssystem nach Anspruch 10, wobei die Vielzahl von Öffnungen (154) eine erste Gruppe von Öffnungen (154a, 154b), die sich in dem ersten Abschnitt (170) des Piccolorohrs (152) befindet, und eine zweite Gruppe von Öffnungen (154c), die sich in dem zweiten Abschnitt (172) des Piccolorohrs (152) befindet, beinhaltet, und wobei eine erste Öffnung, die sich in dem ersten Abschnitt (170) des Piccolorohrs befindet, eine Fläche aufweist, die kleiner ist als eine Fläche einer zweiten Öffnung, die sich in dem ersten Abschnitt (170) des Piccolorohrs befindet, wobei die erste Öffnung nahe dem Einlasspunkt (160) liegt, und die zweite Öffnung nahe dem zweiten Abschnitt (172) des Piccolorohrs liegt, wobei die erste Gruppe von Öffnungen (154a, 154b) die erste Öffnung und die zweite Öffnung beinhaltet.

13. Einlass nach Anspruch 12 oder Antriebssystem nach Anspruch 12, wobei jede Öffnung in der zweiten Gruppe von Öffnungen (154c) eine Fläche aufweist, die ungefähr gleich einer Fläche der zweiten Öffnung in der ersten Gruppe von Öffnungen ist.

14. Einlass nach einem der Ansprüche 7 oder 8 oder Antriebssystem nach Anspruch 10, wobei die Vielzahl von Öffnungen (154) eine erste Gruppe von Öffnungen (154a, 154b), die sich in dem ersten Abschnitt (170) des Piccolorohrs (152) befindet, und eine zweite Gruppe von Öffnungen (154c), die sich in dem zweiten Abschnitt (172) des Piccolorohrs (152) befindet, beinhaltet, und wobei eine erste Öffnung, die sich in dem zweiten Abschnitt (172) des Piccolorohrs befindet, eine Fläche aufweist, die kleiner ist als eine Fläche einer zweiten Öffnung, die sich in dem zweiten Abschnitt (172) des Piccolorohrs befindet, wobei die erste Öffnung nahe dem ersten Abschnitt (170) des Piccolorohrs liegt, und die zweite Öffnung nahe dem distalen Punkt (162) liegt, wobei die zweite Gruppe von Öffnungen (154c) die erste Öffnung und die zweite Öffnung beinhaltet.

15. Piccolorohr nach einem der Ansprüche 1-6, Einlass nach einem der Ansprüche 7-9 oder 11-14 oder Antriebssystem nach einem der Ansprüche 10-14, wobei sich der zweite Abschnitt (172) von dem distalen Punkt bis -90° um die Mittellängsachse des Gasturbinentriebwerks (114) von dem distalen Punkt (162) und von dem distalen Punkt bis +90° um die Mittellängsachse des Gasturbinentriebwerks (114) von dem distalen Punkt (162) erstreckt.

## Revendications

1. Tube piccolo pour système antigivrage, comprenant :
un tube annulaire (156) ; et
une pluralité d'ouvertures (154) formées le long d'une circonférence du tube annulaire (156), dans lequel le tube annulaire (156) comprend une première partie ayant un premier diamètre de section transversale (D1) et une seconde partie ayant un diamètre de section transversale qui diminue du premier diamètre de section transversale (D1) à un second diamètre de section transversale (D2) au niveau d'un point distal (162), le second diamètre de section transversale (D2) étant inférieur au premier diamètre de section transversale (D1), et le point distal (162) étant à 180° depuis un point d'entrée (160) ;
dans lequel la première partie (170) comprend le point d'entrée (160), et la première partie (170) s'étend entre -30° et -90° autour d'un axe longitudinal central de moteur (A-A') depuis le point d'entrée jusqu'à entre + 30° et +90° autour de l'axe longitudinal central de moteur (A-A') à partir du point d'entrée.

2. Tube piccolo selon la revendication 1, dans lequel la première partie comprend un diamètre constant, et dans lequel la second partie a un diamètre de section transversale conique.

3. Tube piccolo selon la revendication 1 ou 2, dans lequel le tube piccolo comprend en outre un conduit (158) couplé fluidiquement au tube annulaire (156) au niveau du point d'entrée (160).

4. Tube piccolo selon la revendication 1, 2 ou 3, dans lequel une surface d'une première ouverture de la pluralité d'ouvertures (154) est approximativement égale à une surface d'une seconde ouverture de la pluralité d'ouvertures (154), la première ouverture étant située à proximité du point d'entrée (160) et la seconde ouverture étant située à proximité du point distal (162).

5. Tube piccolo selon la revendication 1, 2 ou 3, dans lequel la pluralité d'ouvertures (154) comporte un premier groupe d'ouvertures (154a, 154b) situées dans la première partie (170) et un second groupe d'ouvertures (154c) situées dans la seconde partie (172), et dans lequel le premier groupe d'ouvertures (154a, 154b) augmente de surface dans une direction s'étendant du point d'entrée (160) à la seconde partie (172).

6. Tube piccolo selon la revendication 5, dans lequel chaque ouverture du second groupe d'ouvertures (154c) est de surface égale.

7. Entrée pour une nacelle, comprenant :
un cylindre externe (130) ;
un cylindre interne (132) ;
un revêtement de bord (134) situé au niveau d'une extrémité avant du cylindre externe (130) ; et
un tube piccolo (152) selon la revendication 1 ou 2, dans lequel la pluralité d'ouvertures (154) est orientée vers le revêtement de bord (134).

8. Entrée selon la revendication 7, comprenant en outre un conduit (158) couplé fluidiquement au tube piccolo (152) au niveau du point d'entrée (160).

9. Entrée selon la revendication 7 ou 8, dans lequel une surface d'une première ouverture de la pluralité d'ouvertures (154) est approximativement égale à une surface d'une seconde ouverture de la pluralité d'ouvertures (154), la première ouverture étant située à proximité du point d'entrée (160) et la seconde ouverture étant située à proximité du point distal (162).

10. Système de propulsion, comprenant :
un moteur à turbine à gaz (114) ;
une nacelle (100) située autour du moteur à turbine à gaz (114) ;
un tube piccolo (152) selon la revendication 1 ou 2, dans lequel la pluralité d'ouvertures (154) est orientée vers une surface de la nacelle (100) ; et
un conduit (158) couplé fluidiquement entre le moteur à turbine à gaz (114) et le point d'entrée (160) du tube piccolo (152).

11. Entrée selon l'une quelconque des revendications 7 à 9, ou système de propulsion selon la revendication 10, dans lequel chaque ouverture de la pluralité d'ouvertures (154) a une surface approximativement égale.

12. Entrée selon l'une quelconque des revendications 7 ou 8, ou système de propulsion selon la revendication 10, dans lequel la pluralité d'ouvertures (154) comporte un premier groupe d'ouvertures (154a, 154b) situées dans la première partie (170) du tube piccolo (152) et un second groupe d'ouvertures (154c) situées dans la seconde partie (172) du tube piccolo (152), et dans lequel une première ouverture située dans la première partie (170) du tube piccolo a une surface qui est inférieure à une surface d'une seconde ouverture située dans la première partie (170) du tube piccolo, la première ouverture étant située à proximité du point d'entrée (160) et la seconde ouverture étant située à proximité de la seconde partie (172) du tube piccolo, le premier groupe d'ouvertures (154a, 154b) comportant la première ouverture et la seconde ouverture.

13. Entrée selon la revendication 12, ou système de propulsion selon la revendication 12, dans lequel chaque ouverture dans le second groupe d'ouvertures (154c) a une surface qui est approximativement égale à une surface de la seconde ouverture dans le premier groupe d'ouvertures.

14. Entrée selon l'une quelconque des revendications 7 ou 8, ou système de propulsion selon la revendication 10, dans lequel la pluralité d'ouvertures (154) comporte un premier groupe d'ouvertures (154a, 154b) situées dans la première partie (170) du tube piccolo (152) et un second groupe d'ouvertures (154c) situées dans la seconde partie (172) du tube piccolo (152), et dans lequel une première ouverture située dans la seconde partie (172) du tube piccolo a une surface qui est inférieure à une surface d'une seconde ouverture située dans la seconde partie (172) du tube piccolo, la première ouverture étant située à proximité de la première partie (170) du tube piccolo et la seconde ouverture étant située à proximité du point distal (162), le second groupe d'ouvertures (154c) comportant la première ouverture et la seconde ouverture.

15. Tube piccolo selon l'une quelconque des revendications 1 à 6, entrée selon l'une quelconque des revendications 7 à 9 ou 11 à 14, ou système de propulsion selon l'une quelconque des revendications 10 à 14, dans lequel la seconde partie (172) s'étend depuis le point distal jusqu'à -90° autour de l'axe longitudinal central du moteur à turbine à gaz (114) depuis le point distal (162) et depuis le point distal jusqu'à +90° autour de l'axe longitudinal central du moteur à turbine à gaz (114) depuis le point distal (162).
